# EUROPÄISCHE PATENTSCHRIFT

(11) **EP 2 781 010 B1**
(45) Veröffentlichungstag und Bekanntmachung des Hinweises auf die Patenterteilung: **11.01.2017**
(21) Anmeldenummer: 12790503.2
(22) Anmeldetag: 12.11.2012
(51) Int. Cl.: B60L 11/18

(54) **VORRICHTUNG UND VERFAHREN ZUM LADEN EINER TRAKTIONSBATTERIE EINES ELEKTRO- ODER HYBRIDFAHRZEUGES**
DEVICE AND METHOD FOR CHARGING A TRACTION BATTERY OF AN ELECTRIC OR HYBRID VEHICLE
DISPOSITIF ET PROCÉDÉ POUR CHARGER UNE BATTERIE DE TRACTION D'UN VÉHICULE ÉLECTRIQUE OU HYBRIDE

(30) Priorität: 18.11.2011 DE 102011118823
(43) Veröffentlichungstag der Anmeldung: 24.09.2014
(73) Patentinhaber: Volkswagen Aktiengesellschaft, 38440 Wolfsburg (DE)
(72) Erfinder: KONRAD, Peter, 38106 Braunschweig (DE)
(86) Internationale Anmeldenummer: PCT/EP2012/072396
(87) Internationale Veröffentlichungsnummer: WO 2013/072278

(56) Entgegenhaltungen:
- EP-A2- 2 527 186
- WO-A2-2010/119097
- DE-A1- 4 107 391

## Beschreibung

Die Erfindung betrifft eine Vorrichtung und ein Verfahren zum Laden einer Traktionsbatterie eines Elektro- oder Hybridfahrzeuges.

Bei Elektro- oder Hybridfahrzeugen stellt sich das Problem, dass eine Traktionsbatterie durch ein externes Wechselspannungsnetz aufgeladen werden muss. Dabei kann je nach Land oder Ladestation das Wechselspannungsnetz unterschiedlich ausgebildet sein. Dies betrifft sowohl die Anzahl der Phasen als auch die Höhe der Spannung. Des Weiteren ist es wünschenswert, für den Ladevorgang auf möglichst viele bereits vorhandene Komponenten zurückgreifen zu können.

Aus der WO 2010/119097 A2 ist eine Vorrichtung zum Laden einer Traktionsbatterie eines Elektrofahrzeuges bekannt, umfassend mindestens eine Traktionsbatterie, einen Elektromotor mit Induktivitäten, die einen gemeinsamen Anschluss (Sternpunkt) aufweisen, und einen Umrichter, wobei der Umrichter zwischen der Traktionsbatterie und dem Elektromotor angeordnet ist und einen Plus- und Minusanschluss aufweist, wobei der Umrichter für einen motorischen Betrieb eine Gleichspannung der Traktionsbatterie in Wechselspannungen für den Elektromotor und für einen generatorischen Betrieb (rekuperativer Betrieb) mindestens eine Wechselspannung des Elektromotors in eine Gleichspannung für die Traktionsbatterie wandelt. Die Vorrichtung weist weiter Anschlüsse zum Anschließen eines externen Gleichrichters auf, wobei der Gleichrichter eine Wechselspannungsanschlussseite zum Anschließen an ein ein- oder mehrphasiges Wechselspannungsnetz und eine Gleichspannungsanschlussseite mit mindestens einem Plus- und einem Minusanschluss aufweist. Wird dann der Gleichrichter zum Laden mit den Anschlüssen der Vorrichtung verbunden, so sind der Plusanschluss des Gleichrichters mit dem gemeinsamen Anschluss der Induktivitäten verbunden und der Minusanschluss des Gleichrichters mit dem Minuspol der Traktionsbatterie und dem Minusanschluss des Umrichters verbunden. Der Umrichter ist zusammen mit den Induktivitäten dabei wie ein Hochsetzsteller geschaltet.

Der Vorteil dieser Vorrichtung ist, dass weitgehend auf ohnehin vorhandene Bauelemente zurückgegriffen wird, da ausgenutzt wird, dass das Fahrzeug beim Laden nicht angetrieben werden soll. Nachteilig ist, dass sichergestellt sein muss, dass die Spannung am Ausgang des Gleichrichters stets kleiner als die Ladespannung der Traktionsbatterie ist. Dies kann entweder dadurch sichergestellt werden, dass die Ladespannung der Traktionsbatterie entsprechend groß gewählt wird oder der Gleichrichter gesteuert, ausgebildet ist, so dass die Steuerung des Gleichrichters die Spannung auf eine Spannung einstellt, die kleiner als die Ladespannung der Traktionsbatterie ist. Die erste Variante schränkt den Freiheitsgrad bei der Ausbildung der Traktionsbatterie ein. Die zweite Variante erhöht die Kosten bzw. schränkt die Flexibilität bei der Nutzung von externen Ladestationen ein, da diese einen gesteuerten Gleichrichter aufweisen müssen.

Aus der DE 41 07 391 A1 ist eine Vorrichtung zum Laden einer Traktionsbatterie eines Elektro- oder Hybridfahrzeuges bekannt, umfassend mindestens eine Traktionsbatterie, einen Elektromotor mit Induktivitäten, die einen gemeinsamen Anschluss aufweisen, und einen Umrichter, wobei der Umrichter zwischen der Traktionsbatterie und dem Elektromotor angeordnet ist und einen Plus- und einen Minusanschluss aufweist, wobei der Umrichter für einen motorischen Betrieb eine Gleichspannung der Traktionsbatterie in mindestens eine Wechselspannung für den Elektromotor und für einen generatorischen Betrieb mindestens eine Wechselspannung des Elektromotors in eine Gleichspannung für die Traktionsbatterie wandelt. Weiter weist die Vorrichtung Anschlüsse zum Anschließen eines Gleichrichters auf, wobei ein Schaltelement vorgesehen ist, über das im Ladebetrieb ein Pol der Traktionsbatterie mit dem gemeinsamen Anschluss der Induktivitäten verbunden ist, wobei der andere Anschluss an den Gleichrichter vorzeichengerecht mit einem Anschluss des Umrichters verbunden ist.

Der Erfindung liegt das technische Problem zugrunde, eine Vorrichtung und ein Verfahren zum Laden einer Traktionsbatterie eines Elektro- oder Hybridfahrzeuges zu schaffen, die flexibler an unterschiedliche Ladestationen anpassbar ist.

Die Lösung des technischen Problems ergibt sich durch die Gegenstände mit den Merkmalen der Ansprüche 1 und 6. Weitere vorteilhafte Ausgestaltungen der Erfindung ergeben sich aus den Unteransprüchen.

Hierzu umfasst die Vorrichtung zum Laden einer Traktionsbatterie eines Elektro- oder Hybridfahrzeuges mindestens eine Traktionsbatterie, einen Elektromotor mit Induktivitäten, die einen gemeinsamen Anschluss aufweisen, sowie einen Umrichter. Der Umrichter ist zwischen der Traktionsbatterie und dem Elektromotor angeordnet und weist einen Plus- und einen Minusanschluss auf, wobei der Umrichter für einen motorischen Betrieb eine Gleichspannung der Traktionsbatterie in mindestens eine Wechselspannung für den Elektromotor und für einen generatorischen Betrieb mindestens eine Wechselspannung des Elektromotors in eine Gleichspannung für die Traktionsbatterie wandelt. Weiter weist die Vorrichtung Anschlüsse zum Anschließen eines Gleichrichters auf, wobei der Gleichrichter eine Wechselspannungsanschlussseite zum Anschließen an ein ein- oder mehrphasiges externes Wechselspannungsnetz aufweist und eine Gleichspannungsanschlussseite mit mindestens einem Plus- und einem Minusanschluss aufweist. Weiter ist ein Schaltelement vorgesehen, mittels dessen im Ladebetrieb ein Pol der Traktionsbatterie mit dem Anschluss an den Gleichrichter mit entgegengesetzter Polarität und dem gemeinsamen Anschluss der Induktivitäten verbunden ist, wobei der andere Anschluss an den Gleichrichter vorzeichengerecht mit einem Anschluss des Umrichters verbunden ist. Hierdurch wird der Umrichter zusammen mit den Induktivitäten in Form eines Hochsetz-/Tiefsetzstellers geschaltet. Dies ermöglicht eine höhere Flexibilität und erlaubt auch eine Verwendung nicht gesteuerter Gleichrichter ohne Beschränkung hinsichtlich der Wahl der Ladespannung der Traktionsbatterie. Der Elektromotor bzw. die Elektromaschine ist vorzugsweise als dreiphasige Elektromaschine ausgebildet, wobei weiter vorzugsweise die Induktivitäten in Sternschaltung verschaltet sind, so dass der gemeinsame Anschluss der Induktivitäten der Sternpunkt ist.

In einer Ausführungsform ist der Gleichrichter Bestandteil der Vorrichtung und in dem Fahrzeug angeordnet. Alternativ kann dieser auch extern angeordnet sein.

Wie bereits ausgeführt, erlaubt die Vorrichtung die Verwendung eines ungesteuerten Gleichrichters. Allerdings kann die Vorrichtung auch mit gesteuerten Gleichrichtern arbeiten.
Dies ist insbesondere dann vorteilhaft, wenn vom Fahrzeug auch Energie in das Wechselspannungsnetz zurückgespeist werden soll.

Das Schaltelement ist vorzugsweise als Relais ausgebildet, da diese hinsichtlich der relativ hohen Ladeströme gegenüber Leistungshalbleitern Vorteile aufweisen. Allerdings sind auch Ausführungen mit Leistungshalbleitern möglich, wobei jedoch gegebenenfalls durch geeignete Verschaltung parasitäre Leckströme zu unterbinden sind. Dies kann beispielsweise durch zwei hintereinander geschaltete IGBTs erfolgen, die hinsichtlich Drain und Source vertauscht sind.

Weiter kann vorgesehen sein, dass die Anschlüsse zum Anschließen eines Gleichrichters mit dem Schaltelement gekoppelt sind, so dass beim Anschließen eines Gleichrichters das Schaltelement in die Stellung für den Ladebetrieb geschaltet wird. Bei Varianten, wo der Gleichrichter Bestandteil der Vorrichtung ist, kann die Kopplung mit den Anschlüssen an der Wechselspannungsseite des Gleichrichters erfolgen. Die Kopplung kann dabei mechanisch oder elektrisch sein.

Die Erfindung wird nachfolgend anhand eines bevorzugten Ausführungsbeispiels näher erläutert. Die Fig. zeigen:
- Fig. 1: eine schematische Darstellung einer Vorrichtung zum Laden einer Traktionsbatterie (Stand der Technik),
- Fig. 2a-c: eine schematische Herleitung einer Hochsetzsteller-Verschaltung (Stand der Technik),
- Fig. 3: eine Darstellung einer erfindungsgemäßen Vorrichtung zum Laden einer Traktionsbatterie und
- Fig. 4a-d: eine schematische Herleitung einer Hochsetz-Tiefsetz-Verschaltung.

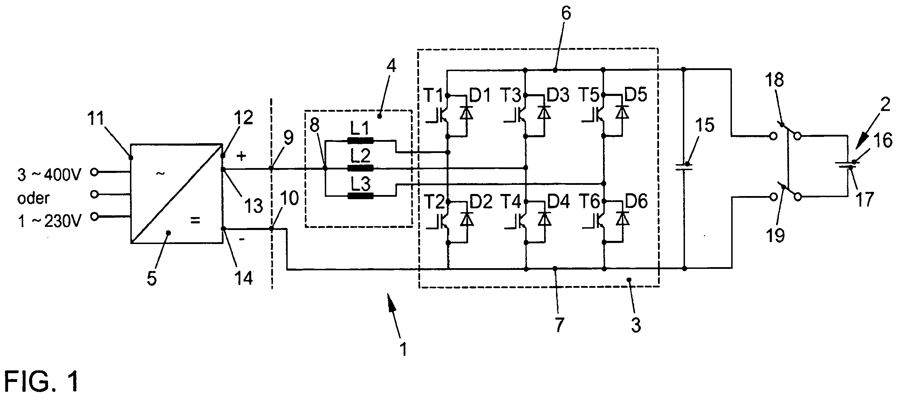

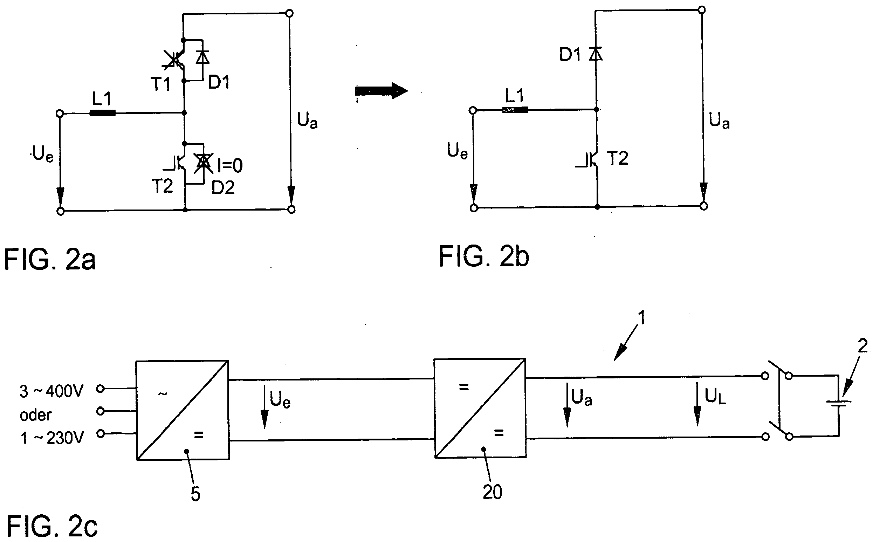

Bevor die Erfindung anhand eines bevorzugten Ausführungsbeispiels näher erläutert wird, soll zunächst der Stand der Technik anhand der Fig. 1 und 2a-c näher erläutert werden. Dabei werden für gleiche Elemente gleiche Bezugszeichen verwendet, damit die Gemeinsamkeiten und Unterschiede besser verständlich werden.

Die Vorrichtung 1 zum Laden einer Traktionsbatterie 2 eines Elektro- oder Hybridfahrzeuges umfasst einen Umrichter 3, einen Elektromotor 4 mit Induktivitäten L1-L3 und einen Gleichrichter 5. Der Umrichter 3 umfasst drei Brückenzweige, wobei in jedem Brückenzweig zwei Schaltelemente mit einer parallel geschalteten Freilaufdiode angeordnet sind, die mit T1-T6 bzw. D1-D6 bezeichnet sind. Die Schaltelemente T1-T6 werden durch eine nicht dargestellte Steuereinheit angesteuert. Dabei weist der Umrichter 3 einen Plusanschluss 6 und einen Minusanschluss 7 auf. Die Mittelabgriffe des Umrichters 3 sind jeweils mit einer der Induktivitäten L1-L3 des Elektromotors 4 verbunden, wobei alle Induktivitäten L1-L3 einen gemeinsamen Anschluss 8 (Sternpunkt) aufweisen. Die Vorrichtung 1 weist Anschlüsse 9, 10 zum Anschließen des Gleichrichters 5 auf. Der Gleichrichter 5 weist eine Wechselspannungsanschlussseite 11 und eine Gleichspannungsanschlussseite 12 auf, die einen Plusanschluss 13 und einen Minusanschluss 14 aufweist. Dabei ist der Minusanschluss 14 des Gleichrichters 5 mit dem Minusanschluss 7 des Umrichters 3 verbunden. Der Plusanschluss 13 ist mit dem gemeinsamen Anschluss 8 der Induktivitäten L1-L3 verbunden. Die Wechselspannungsanschlussseite 11 des Gleichrichters 5 ist mit einem ein- oder mehrphasigen Wechselspannungsnetz verbunden, beispielsweise mit drei 400 V-Phasen oder einer 230 V-Phase. Des Weiteren ist noch parallel zum Umrichter 3 ein Zwischenkreiskondensator 15 angeordnet und an den Polen 16, 17 der Traktionsbatterie 2 Schaltelemente 18, 19 vorgesehen, mittels derer die Traktionsbatterie 2 von den übrigen Elementen galvanisch abgetrennt werden kann.

Im Fahrbetrieb des Fahrzeugs (ohne Gleichrichter 5 bzw. deaktiviertem Gleichrichter) arbeitet der Umrichter 3 in zwei verschiedene Richtungen. Einerseits kann dieser die Gleichspannung der Traktionsbatterie 2 in drei phasenversetzte Wechselspannungssignale umsetzen, um den Elektromotor 4 motorisch anzutreiben. Andererseits kann dieser auch die Wechselspannungen des Elektromotors 4 in eine Gleichspannung zum Laden der Traktionsbatterie 2 umformen, wenn beispielsweise rekuperiert werden soll.

Im Ladebetrieb mit angeschlossenem Gleichrichter 5 stellt die Verschaltung der Induktivitäten L1-L3 mit dem Umrichter 3 einen Hochsetzsteller dar. Dies soll anhand der Fig. 2a-c kurz erläutert werden. In Fig. 2a ist exemplarisch eine der Brückenschaltungen dargestellt, wobei alle drei Brückenschaltungen parallel arbeiten. Das Schaltelement T1 ist während des Ladens immer offen, wohingegen das Schaltelement T2 durch die nicht dargestellte Steuereinheit getaktet wird. Die Freilaufdiode D2 ist dabei immer in Sperrrichtung gepolt. Daher haben das Schaltelement T1 und die Freilaufdiode D2 kleine Wirkung, was durch das jeweilige Durchkreuzen symbolisiert ist. In Fig. 2b ist die Schaltung mit den verbleibenden Elementen dargestellt, die einen Hochsetzsteller darstellt. In Fig. 2c ist schließlich das Ersatzschaltbild der Vorrichtung 1 dargestellt, wobei der Hochsetzsteller 20 anstelle von Umrichter 3 und Elektromotor 4 eingezeichnet ist. Daraus folgt jedoch, dass sichergestellt werden muss, dass die Spannung Uₑ am Ausgang des Gleichrichters 5 immer kleiner sein muss als die Ladespannung U_{L} (= Uₐ am Hochsetzsteller) der Traktionsbatterie 2. Dies kann durch eine geeignet große Ladespannung U_{L} der Traktionsbatterie 2 oder eine Steuerung des Gleichrichters 5 erfolgen, so dass dessen Ausgangsspannung Uₑ einstellbar ist.

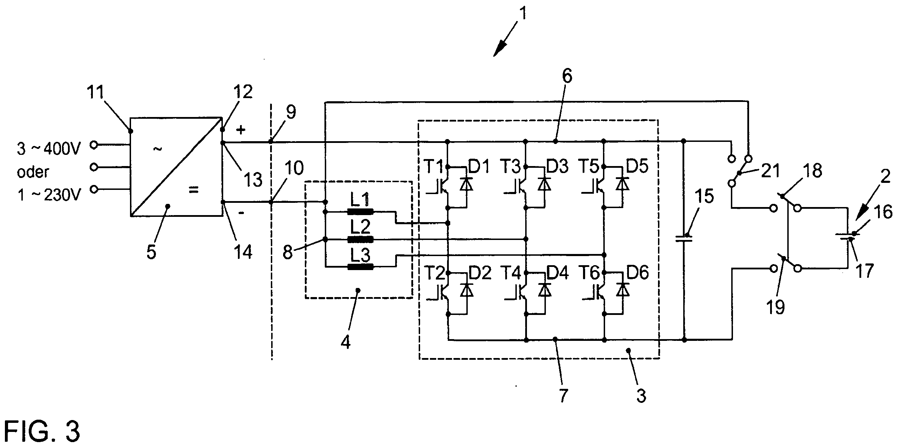

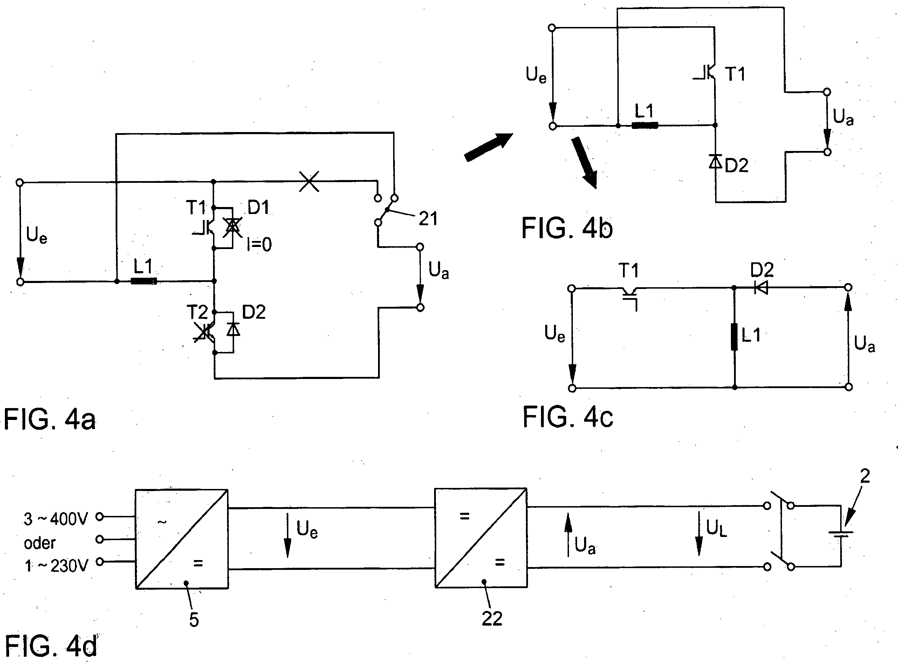

In der Fig. 3 ist eine Ausführungsform der erfindungsgemäßen Vorrichtung 1 zum Laden einer Traktionsbatterie 2 dargestellt. Der wesentliche Unterschied ist ein Schaltelement 21, das an dem Pluspol 16 der Traktionsbatterie 2 angeordnet ist. Dabei ist das Schaltelement 21 nicht unmittelbar am Pluspol 16 angeordnet, da noch das Schaltelement 18 dazwischen geschaltet ist. Nachfolgend soll davon ausgegangen werden, dass die Schaltelemente 18, 19 geschlossen sind. Das Schaltelement 21 kann zwei Stellungen einnehmen, nämlich die eingezeichnete Stellung für den Ladebetrieb oder eine Stellung für den Fahrbetrieb. Bei geschlossenen Schaltelementen 18, 19 ist im Ladebetrieb der Pluspol 16 der Traktionsbatterie 2 mit dem gemeinsamen Anschlusspunkt 8 der Induktivitäten L1-L3 und dem Anschluss 10 an den Gleichrichter 5 verbunden, wobei der Anschluss 10 mit dem Minusanschluss 14 des Gleichrichters 5 verbunden ist. Der Plusanschluss 13 des Gleichrichters 5 ist mit dem Plusanschluss 6 des Umrichters 3 verbunden. Betrachtet man wieder eine Brückenschaltung, so ergibt sich die Schaltung gemäß Fig. 4a. Dabei ist die Freilaufdiode D1 immer in Sperrrichtung gepolt. Ebenso ist das Schaltelement T2 immer offen. In Fig. 4b ist die Schaltung ohne die unwirksamen Elemente dargestellt. Durch umzeichnen gelangt man von einer Darstellung gemäß Fig. 4b zu einer Darstellung gemäß Fig. 4c. Dies stellt aber eine bekannte Schaltungsanordnung für einen Hochsetz-Tiefsetzsteller dar, wobei sich das Vorzeichen der Ausgangsspannung Uₐ am Hochsetz-Tiefsetzsteller umdreht. Daher ist auch der Pluspol 16 der Traktionsbatterie 2 mit dem Minusanschluss 14 des Gleichrichters 5 verbunden. Das entsprechende Ersatzschaltbild der Vorrichtung 1 mit dem Hochsetz-Tiefsetzsteller 22 ist in Fig. 4d dargestellt. Hierdurch kann eine Ausgangsspannung Uₑ des Gleichrichters 5 sowohl nach oben als auch nach unten an eine Ladespannung U_{L} der Traktionsbatterie 2 angepasst werden. Daher kann auch ein ungesteuerter Gleichrichter 5 verwendet werden, ohne dass dies zwangsweise Werte für die Ladespannung U_{L} der Traktionsbatterie 2 vorgibt. Somit ergibt sich eine größere Flexibilität hinsichtlich der Verwendung von Gleichrichtern 5 und Ladespannungen U_{L}.

Ergänzend sei angemerkt, dass das Schaltelement 21 auch dem Minuspol 17 der Traktionsbatterie 2 zugeordnet werden kann. Dann wird der Minuspol 17 der Traktionsbatterie 2 mit dem gemeinsamen Anschlusspunkt 8 der Induktivitäten L1-L3 sowie dem Anschluss 9 bzw. dem Plusanschluss 13 des Gleichrichters verbunden. Der Minusanschluss 14 des Gleichrichters 5 ist dann mit dem Minusanschluss 7 des Umrichters 3 verbunden.

In der Stellung Fahrbetrieb des Schaltelements 21 ist der Pluspol 16 der Traktionsbatterie 2 bei der Schaltung gemäß Fig. 3 mit dem Plusanschluss 6 des Umrichters 3 verbunden. Abschließend sei noch einmal angemerkt, dass der Gleichrichter 5 Bestandteil der Vorrichtung 1 sein kann, aber nicht sein muss, sondern auch extern angeordnet sein kann.

### Bezugszeichenliste

- 1: Vorrichtung
- 2: Traktionsbatterie
- 3: Umrichter
- 4: Elektromotor
- 5: Gleichrichter
- 6: Plusanschluss
- 7: Minusanschluss
- 8: gemeinsamer Anschluss (Sternpunkt)
- 9, 10: Anschlüsse
- 11: Wechselspannungsanschlussseite
- 12: Gleichspannungsanschlussseite
- 13: Plusanschluss
- 14: Minusanschluss
- 15: Zwischenkreiskondensator
- 16, 17: Pole
- 18, 19: Schaltelemente
- 20: Hochsetzsteller
- 21: Schaltelement
- 22: Hochsetz-Tiefsetzsteller
- D1-D6: Freilaufdiode
- L1-L3: Induktivitäten
- T1-T6: Schaltelemente
- Uₑ, Uₐ: Eingangs- und Ausgangsspannung am Hochsetz-Tiefsetzsteller bzw. Hochsetzsteller
- U_{L}: Ladespannung der Traktionsbatterie

## Patentansprüche

1. Vorrichtung (1) zum Laden einer Traktionsbatterie (2) eines Elektro- oder Hybridfahrzeuges, umfassend mindestens eine Traktionsbatterie (2), einen Elektromotor (4) mit Induktivitäten (L1-L3), die einen gemeinsamen Anschluss (8) aufweisen, und einen Umrichter (3), wobei der Umrichter (3) zwischen der Traktionsbatterie (2) und dem Elektromotor (4) angeordnet ist und einen Plus- und einen Minusanschluss (6, 7) aufweist, wobei der Umrichter (3) für einen motorischen Betrieb eine Gleichspannung der Traktionsbatterie (2) in mindestens eine Wechselspannung für den Elektromotor (4) und für einen generatorischen Betrieb mindestens eine Wechselspannung des Elektromotors (4) in eine Gleichspannung für die Traktionsbatterie (2) wandelt, wobei die Vorrichtung (1) Anschlüsse (9, 10) zum Anschließen eines Gleichrichters (5) aufweist, wobei ein Schaltelement (21) vorgesehen ist, über das im Ladebetrieb ein Pol (16, 17) der Traktionsbatterie (2) mit dem gemeinsamen Anschluss (8) der Induktivitäten (L1-L3) verbunden ist, wobei der andere Anschluss (9, 10) an den Gleichrichter (5) vorzeichengerecht mit einem Anschluss (6, 7) des Umrichters (3) verbunden ist,
**dadurch gekennzeichnet, dass**
der Gleichrichter (5) eine Wechselspannungsanschlussseite (11) zum Anschließen an ein ein- oder mehrphasiges externes Wechselspannungsnetz aufweist und eine Gleichspannungsanschlussseite (12) mit mindestens einem Plus- und einem Minusanschluss (13, 14) aufweist, wobei mindestens ein Anschluss (13, 14) auf der Gleichspannungsanschlussseite (12) mit dem gemeinsamen Anschluss (8) der Induktivitäten (L1-L3) verbindbar ist, wobei über das Schaltelement (21) im Ladebetrieb zusätzlich der Pol (16, 17) der Traktionsbatterie (3), der mit dem gemeinsamen Anschluss (8) der Induktivitäten (L1-L3) verbunden ist, mit dem Anschluss (10, 9) an den Gleichrichter (5) mit entgegengesetzter Polarität verbunden ist.

2. Vorrichtung nach Anspruch 1, **dadurch gekennzeichnet, dass** die Vorrichtung (1) den Gleichrichter (5) umfasst.

3. Vorrichtung nach Anspruch 2, **dadurch gekennzeichnet, dass** der Gleichrichter (5) als gesteuerter oder ungesteuerter Gleichrichter (5) ausgebildet ist.

4. Vorrichtung nach einem der vorangegangenen Absprüche, **dadurch gekennzeichnet, dass** das Schaltelement (21) als Relais ausgebildet ist.

5. Vorrichtung nach Anspruch 1, **dadurch gekennzeichnet, dass** die Anschlüsse (9, 10) zum Anschließen eines Gleichrichters (5) mit dem Schaltelement (21) gekoppelt sind, so dass beim Anschließen eines Gleichrichters (5) das Schaltelement (21) in die Stellung für den Ladebetrieb geschaltet wird.

6. Verfahren zum Laden einer Traktionsbatterie (2) eines Elektro- oder Hybridfahrzeugs mittels einer Vorrichtung (1) nach Anspruch 1 und einem Gleichrichter (5), wobei der Gleichrichter (5) mit seiner Wechselspannungsanschlussseite (11) an ein ein- oder mehrphasiges externes Wechselspannungsnetz angeschlossen wird und an der Gleichspannungsanschlussseite (12) mit den Anschlüssen (9, 10) zum Anschließen des Gleichrichters (5) verbunden ist, wobei das Schaltelement (21) in eine Stellung für den Ladebetrieb geschaltet wird und in Abhängigkeit der an der Gleichspannungsanschlussseite (12) anliegenden Spannung (Uₑ) im Vergleich zu einer Ladespannung (U_{L}) der Traktionsbatterie (2) der Umrichter (3) mit den Induktivitäten (L1-L3) als Hoch- oder Tiefsetzsteller betrieben wird.

7. Verfahren nach Anspruch 6, **dadurch gekennzeichnet, dass** der Gleichrichter (5) als gesteuerter Gleichrichter (5) ausgebildet ist, wobei die an der Gleichspannungsanschlussseite (12) anliegende Spannung (Uₑ) durch die Steuerung des Gleichrichters (5) eingestellt wird.

8. Verfahren nach Anspruch 7, **dadurch gekennzeichnet, dass** über den gesteuerten Gleichrichter (5) Energie in das Wechselspannungsnetz zurückgespeist wird.

9. Verfahren nach einem der Ansprüche 6 bis 8, **dadurch gekennzeichnet, dass** beim Verbinden des Gleichrichters (5) mit dem Wechselspannungsnetz oder mit der Vorrichtung (1) das Schaltelement (21) automatisch in den Ladebetrieb geschaltet wird.

## Claims

1. Device (1) for charging a traction battery (2) of an electric or hybrid vehicle, comprising at least one traction battery (2), an electric motor (4) with inductances (L1-L3) having a common connection (8), and a converter (3), the converter (3) being arranged between the traction battery (2) and the electric motor (4) and having a positive connection and a negative connection (6, 7), the converter (3), for motor operation, converting a DC voltage from the traction battery (2) into at least one AC voltage for the electric motor (4) and, for generator operation, converting at least one AC voltage from the electric motor (4) into a DC voltage for the traction battery (2), the device (1) having connections (9, 10) for connecting a rectifier (5), a switching element (21) being provided and being used, during charging operation, to connect one pole (16, 17) of the traction battery (2) to the common connection (8) of the inductances (L1-L3), the other connection (9, 10) to the rectifier (5) being connected, with the correct sign, to a connection (6, 7) of the converter (3),
**characterized in that**
the rectifier (5) has an AC voltage connection side (11) for connection to a single-phase or multiphase external AC voltage network and a DC voltage connection side (12) with at least one positive connection and one negative connection (13, 14), at least one connection (13, 14) on the DC voltage connection side (12) being able to be connected to the common connection (8) of the inductances (L1-L3), that pole (16, 17) of the traction battery (3) which is connected to the common connection (8) of the inductances (L1-L3) additionally being connected to the connection (10, 9) to the rectifier (5) with opposite polarity during charging operation via the switching element (21).

2. Device according to Claim 1, **characterized in that** the device (1) comprises the rectifier (5).

3. Device according to Claim 2, **characterized in that** the rectifier (5) is in the form of a controlled or uncontrolled rectifier (5).

4. Device according to one of the preceding claims, **characterized in that** the switching element (21) is in the form of a relay.

5. Device according to Claim 1, **characterized in that** the connections (9, 10) for connecting a rectifier (5) are coupled to the switching element (21), with the result that the switching element (21) is switched to the position for charging operation when a rectifier (5) is connected.

6. Method for charging a traction battery (2) of an electric or hybrid vehicle by means of a device (1) according to Claim 1 and a rectifier (5), the AC voltage connection side (11) of the rectifier (5) being connected to a single-phase or multiphase external AC voltage network and the DC voltage connection side (12) of the rectifier (5) being connected to the connections (9, 10) for connecting the rectifier (5), the switching element (21) being switched to a position for charging operation, and the converter (3) with the inductances (L1-L3) being operated as a boost converter or a buck converter on the basis of the voltage (Uₑ) applied to the DC voltage connection side (12) in comparison with a charging voltage (U_{L}) of the traction battery (2).

7. Method according to Claim 6, **characterized in that** the rectifier (5) is in the form of a controlled rectifier (5), the voltage (Uₑ) applied to the DC voltage connection side (12) being adjusted by controlling the rectifier (5).

8. Method according to Claim 7, **characterized in that** energy is fed back into the AC voltage network via the controlled rectifier (5).

9. Method according to one of Claims 6 to 8, **characterized in that** the switching element (21) is automatically switched to charging operation when the rectifier (5) is connected to the AC voltage network or to the device (1).

## Revendications

1. Ensemble (1) pour charger une batterie de traction (2) d'un véhicule électrique ou hybride,
l'ensemble comprenant au moins une batterie de traction (2), un moteur électrique (4) doté d'inductances (L1-L3) qui présentent une borne de raccordement (8) commune et un convertisseur (3),
le convertisseur (3) étant disposé entre la batterie de traction (2) et le moteur électrique (4) et présentant une borne de raccordement positive et une borne de raccordement négative (6, 7),
le convertisseur (3) convertissant en vue d'un fonctionnement en moteur une tension continue de la batterie de traction (2) en au moins une tension alternative pour le moteur électrique (4) et en vue d'un fonctionnement en génératrice, au moins une tension alternative du moteur électrique (4) en une tension continue pour la batterie de traction (2),
l'ensemble (1) présentant des bornes de raccordement (9, 10) qui permettent de raccorder un redresseur (5), un élément de commutation (21) par lequel un pôle (16, 17) de la batterie de traction (2) est raccordé en fonctionnement de charge à la borne de raccordement (8) commune des inductances (L1-L3) étant prévu, l'autre borne de raccordement (9, 10) étant raccordée au redresseur (5) avec le signe correct à une borne (6, 7) du convertisseur (3),
**caractérisé en ce que**
le convertisseur (5) présente un côté (11) de raccordement d'une tension alternative qui permet le raccordement à un réseau externe en tension alternative monophasée ou polyphasée et un côté (12) de raccordement à une tension continue qui présente au moins une borne de raccordement positive et une borne de raccordement négative (13, 14),
**en ce qu'**au moins une borne de raccordement (13, 14) du côté (12) de raccordement à une tension continue peut être raccordée à la borne de raccordement (8) commune des inductances (L1-L3), et
**en ce qu'**en fonctionnement de charge, le pôle (16, 17) de la batterie de traction (3) raccordé à la borne de raccordement (8) commune des inductances (L1-L3) est raccordé par l'intermédiaire de l'élément de commutation (21) à la borne de raccordement (10, 9) de polarité opposée du redresseur (5).

2. Ensemble selon la revendication 1, **caractérisé en ce que** l'ensemble (1) comporte le redresseur (5).

3. Ensemble selon la revendication 2, **caractérisé en ce que** le redresseur (5) est configuré comme redresseur (5) asservi ou non asservi.

4. Ensemble selon l'une des revendications précédentes, **caractérisé en ce que** l'élément de commutation (21) est configuré comme relais.

5. Ensemble selon la revendication 1, **caractérisé en ce que** les bornes de raccordement (9, 10) sont raccordées à l'élément de commutation (21) pour le raccordement au redresseur (5) de telle sorte que lorsqu'un redresseur (5) est raccordé, l'élément de commutation (21) est commuté dans sa position de fonctionnement en charge.

6. Procédé de chargement d'une batterie de traction (2) d'un véhicule électrique ou hybride au moyen d'un ensemble (1) selon la revendication 1 et d'un redresseur (5), dans lequel le redresseur (5) est raccordé par son côté (11) de raccordement à une tension alternative à un réseau externe de tension alternative monophasée ou polyphasée et est raccordé au côté (12) de raccordement à une tension continue par les bornes de raccordement (9, 10) qui permettent de raccorder le redresseur (5), l'élément de commutation (21) étant commuté dans une position permettant le fonctionnement en charge et, en fonction de la tension (Uₑ) appliquée sur le côté (12) de raccordement à une tension continue, est utilisé comme releveur ou abaisseur de tension par rapport à une tension de charge (U_{L}) de la batterie de traction (2), le convertisseur (3) étant utilisé comme releveur de tension ou abaisseur de tension avec les inductances (L1-L3).

7. Procédé selon la revendication 6, **caractérisé en ce que** le redresseur (5) est configuré comme redresseur asservi (5), la tension (Uₑ) appliquée sur le côté (12) de raccordement à une tension continue étant établie par la commande du redresseur (5).

8. Procédé selon la revendication 7, **caractérisé en ce que** de l'énergie est renvoyée dans le réseau à tension alternative par l'intermédiaire du redresseur (5) asservi.

9. Procédé selon l'une des revendications 6 à 8, **caractérisé en ce que** lorsque le redresseur (5) est raccordé au réseau en tension alternative ou à l'ensemble (1), l'élément de commutation (21) est automatiquement commuté en fonctionnement de charge.
